(19) Europäisches Patentamt
European Patent Office
Office européen des brevets

(11) **EP 1 527 940 B1**

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(51) Int Cl.:
***B60K 31/00*** *(2006.01)*

(21) Anmeldenummer: **04025788.3**

(22) Anmeldetag: **29.10.2004**

(54) **Verfahren und Vorrichtung zur risikogeregelten Geschwindigkeit eines Kraftfahrzeuges**

Method and apparatus for regulating the speed of a motor vehicle according to the risk

Méthode et dispositif de réglage de la vitesse d'un véhicule automobile en fonction des risques

(84) Benannte Vertragsstaaten:
**AT BE BG CH CY CZ DE DK EE ES FI FR GB GR HU IE IT LI LU MC NL PL PT RO SE SI SK TR**

(30) Priorität: **30.10.2003 DE 20316681 U**

(43) Veröffentlichungstag der Anmeldung:
**04.05.2005 Patentblatt 2005/18**

(73) Patentinhaber: **Bastian, Dieter**
**19055 Schwerin (DE)**

(72) Erfinder: **Bastian, Dieter**
**19055 Schwerin (DE)**

(74) Vertreter: **Jaap, Reinhard**
**Buchholzallee 32**
**19370 Parchim (DE)**

(56) Entgegenhaltungen:
| | |
|---|---|
| **EP-A- 0 901 055** | **WO-A-20/04087454** |
| **DE-A1- 19 638 511** | **DE-A1- 19 700 353** |
| **DE-A1- 19 821 163** | **DE-C1- 4 425 957** |

**Beschreibung**

Die Erfindung bezieht sich auf ein Verfahren zur risikogeregelten Geschwindigkeit eines Kraftfahrzeuges und Vorrichtung zur Durchführung des Verfahrens nach den Oberbegriffen der Ansprüche 1 und 5. Das Verfahren und die Vorrichtung zur risikogeregelten Geschwindigkeit eines Kraftfahrzeuges werden zur Verbesserung der Verkehrssicherheit eingesetzt.

Eine große Anzahl von Patentschriften offenbart technische Einrichtungen für die Detektion von Merkmalen der Verkehrsumwelt mit dem Ziel, Risikomerkmale, die den Verkehr gefährden, rechtzeitig zu erkennen und ihnen gegenzusteuern. So beschreiben die DE 100 36 276 A1, die DE 101 03 767 A 1, die DE 195 01 950 A 1 und die EP 0 964 380 A 2 Sensoren und Sensorsysteme, die nicht mehr nur einzelne Hindernisse aufspüren, sondern selbst das ganze Umfeld des Fahrzeugs absuchen und dabei sogar zwischen stationären und mobilen Hindernissen unterscheiden. Detektoren mit Photomischdioden, wie sie in der DE 198 21 974 A 1 und der DE 199 16 123 A 1 beschrieben sind, unterscheiden selbst Fahrzeuge von Fußgängern und Radfahrern und Kinder von Erwachsenen.

Dem Bestreben liegt die Erkenntnis zugrunde, dass der Kraftfahrer etwa 90 % seiner Informationen über die Verkehrsumwelt visuell wahrnimmt. Allerdings interpretiert er nach Nakayama und Loomis (1974) bereits unter Regelverhältnissen, d.h. beim Fahren mit einem Regelführerschein ohne Einfluss von Alkohol und Drogen, von diesen perzipierten Informationen bis zur Hälfte unvollkommen oder falsch.

Gerling (2004) wertete in einer territorialen Totalerhebung 27261 Unfälle aus, die sich unter solchen Regeverhältnissen ereigneten. Dabei identifizierte er 19 verschiedene Merkmale des äußeren Milieus, die der Fahrer zu perzipieren hatte, wovon bis zu 9 zugleich vorkamen. Die Unfallschwere nahm mit der Merkmalsmenge in linearer Regression zu. Für das Risikopotenzial konnte aber mit der spezifischen Gefährlichkeit der Merkmale noch eine zweite Komponente nachgewiesen werden, die in einer beträchtlichen Spannbreite von der Geschwindigkeit moderiert wird. Mit diesen markanten Ergebnissen stellten sich die 19 identifizierten Merkmale des äußeren Milieus als das objektive Substrat von Wahrnehmungsverlusten des Kraftfahrers heraus.

Ähnliche Aspekte bringen auch die DE 41 23 110 A 1, die DE 44 37 365 A 1, die DE 196 38 511 A 1, die DE 197 00 353 A 1 und die US 005 748 476 A zum Ausdruck, die sich mit der Geschwindigkeitsabhängigkeit sicherheitsrelevanter Systemzustandsgrößen des Kraftfahrzeugs und seiner Umgebung sowie mit diesbezüglichen Regelprozessen unter Zuhilfenahme von Bordcomputern, Navigationssystemen, wie das Global Positioning System (GPS), und von infrastrukturell fest installierten Verkehrsleitsystemen beschäftigen. Gewissermaßen ihre Vollendung finden solche Systeme in der vollautomatischen Führung von Fahrzeugen, wie in der DE 195 01 950 A 1 offenbart, wenngleich dazu aus der Sicht praktischer Erprobungen erhebliche Einwände geltend gemacht werden (Automotive Engineer, 1995).

Das integrale Risikopotenzial von Streckenabschnitten und ganzer Fahrstrecken, berechnet aus den beiden Komponenten der Merkmalsmenge und der geschwindigkeitsmoderierten spezifischen Gefährlichkeit von Merkmalen des äußeren Milieus, wird schließlich in der WO 2004 / 087 454 A 1 beschrieben. Der mit Hilfe der Satellitennavigation und eines Sensorpakets ermittelte Istwert wird in einer Standardmatrix mit dem Sollwert eines vorgegebenen Potenzials verglichen und das Motormanagement darauf eingestellt. *In ähnlicher Weise verfährt das in der DE 198 21 163 A1 -, die den Oberbegriff des Anspruchs 1 bildet, offenbarte Fahrerassistenzsystem, das detektierte Umgebungsparameter mit gespeicherten zulässigen Parameter vergleicht.*

Trotz aller dieser Fortschritte ist es bis heute nicht gelungen, das Zusammenwirken der zahlreichen Faktoren des äußeren Milieus in eine allgemeingültige Formel des Risikopotenzials zu bringen, wie man sie sich folgendermaßen vorstellen könnte:

$$P = k \cdot FBS^{\alpha} \cdot K^{\beta} \cdot GSP^{\gamma} \cdot FM^{\delta} \cdot N^{\epsilon} \cdot VFF^{\xi} \cdot FG^{\eta},$$

wobei k für Konstante, FBS für Fahrbahnstruktur, K für Kurven, GSP für ausgeschilderte Gefahrenschwerpunkte, FM für Fahrbahnmängel, N für Nässe, VFF für vorausfahrende Fahrzeuge und FG für Fußgängerbeteiligungen am Verkehr stehen. Eine solche Formel fand sich bisher nicht, weil die Parameter $\alpha$, $\beta$, $\gamma$, $\delta$, $\epsilon$, $\xi$, $\eta$ noch nicht kalibriert werden können. Gerling (2004), der in einer sehr großen Untersuchungsreihe (n = 32096) nicht nur 7, sondern 19 solcher Merkmale des äußeren Milieus identifizierte, fand als Begründung dafür nahezu 2000 verschiedene Cluster der 19 Merkmale, wovon über 94 % mit jeweils weniger als 50 Fällen auftraten. Das zieht jeden Versuch einer Kalibrierung der Parameter und einer stochastischen Validierung des Risikopotenzials in Zweifel.

Mit der in der WO 2004 / 087 454 A 1 beschriebenen Methode lassen sich ca. 2/3 aller schweren Unfälle vermeiden (Gerling (2004)). Wesentlich bessere Ergebnisse bieten sich aus der Betrachtungsweise im Zusammenhang mit künstlich-neuronalen Netzen an.

Der Erfindung liegt daher die Aufgabe zu Grunde, ein Verfahren und eine Vorrichtung zur risikogeregelten Geschwindigkeit eines Kraftfahrzeuges zu entwickeln, die einerseits für eine elektronische Fahrerassistenz und zum andern über die Risikobelastung der Infrastruktur genauere Angaben liefern, als stochastische Lösungen zu leisten vermögen.

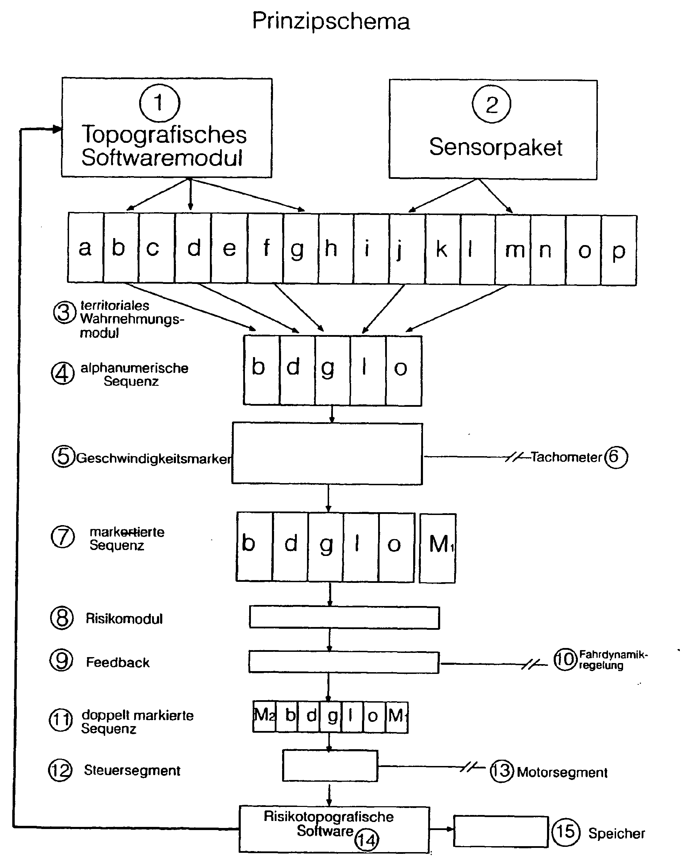

Diese Aufgabe wird durch die kennzeichnenden Merkmale der Ansprüche 1 und 5, gelöst. Weitere Ausgestaltungsmöglichkeiten ergeben sich aus den Unteransprüchen 2 bis 4 und 5 bis 9. Das neue Verfahren und die neue Vorrichtung zur risikogeregelten Geschwindigkeit eines Kraftfahrzeuges beseitigen die genannten Nachteile des Standes der Technik. Die Erfindung soll anhand eines Ausführungsbeispieles näher erläutert werden. Dazu zeigt die einzige Figur ein Prinzipschema einer Vorrichtung zur risikogeregelten Geschwindigkeit eines Kraftfahrzeuges.

Nach dieser Figur besteht die Vorrichtung zur risikogeregelten Geschwindigkeit eines Kraftfahrzeuges eingangsseitig aus einem Aufnahmemodul, das ein topografisches Softwaremodul 1 und ein Sensorpaket 2 mit insgesamt 16 Eingangsgrößen umfasst. Diese 16 Eingangsgrößen werden von Merkmalen oder Risikofaktoren des äußeren Milieus gebildet, die in Anlehnung an die Untersuchungen von Gerling (2004) in einer territorialen Totalerhebung von 32.096 Straßenverkehrsunfällen identifiziert wurden, davon 11 permanente der Infrastruktur und 5 temporäre der Verkehrsumwelt (Tabelle 1).

Tabelle 1: Risikofaktoren des äußeren Milieus

| Numerus | permanente Risikofaktoren | Numerus | temporäre Risikofaktoren |
|---|---|---|---|
| a | Kurven | l | Dunkelheit |
| b | Steigungen | m | Nässe |
| c | beschilderte Gefahrenschwerpunkte | n | Glätte |
| d | Geschwindigkeitszonen | o | vorausfahrende Fahrzeuge |
| e | Fahrbahnmängel | p | Fußgänger / Radfahrer |
| f | Bäume und Masten | | |
| g | Vorfahrten | | |
| h | Aus- und Einfahrten | | |
| i | Wildwechsel | | |
| j | lokale Unfallschwerpunkte | | |
| k | Baustellen | | |

Fahrbahnmängel sind nicht nur ausgeschilderte Gefahrenstellen, sondern im weitesten Sinne alle zeitlichen Momente, in denen fahrzeugeigene Fahrdynamiksensoren eine beginnende Instabilität anzeigen. Lokale Unfallschwerpunkte sind diejenigen Stellen und Streckenabschnitte, die als solche in der polizeilichen Verkehrsunfalllage geführt werden und aus diesen zu übernehmen sind.

Die permanenten Risikofaktoren sind in die risikotopographische Software 14 als safety features implementiert. Die Software ist in geeigneter Weise mit einem handelsüblichen Navigationssystem des Fahrzeugs verbunden. Die temporären Risikofaktoren werden mit Hilfe des Sensorpakets 2 detektiert.

Wie die safety features sind auch die Streckenabschnitte als unveränderliche Einheiten fest in die risikotopographische Software implementiert. Streckenabschnitte in diesem Sinne sind entweder Verkehrsknoten oder jeweils die Strecke zwischen zwei Verkehrsknoten. Längere Strecken zwischen zwei Verkehrsknoten können unterteilt werden, in der Regel in Strecken von 50 m. Mit der Ausnahme von Geschwindigkeitszonen und Baustellen darf sich dabei jedoch kein Risikofaktor über zwei oder mehrere Abschnitte erstrecken.

Die Gesamtheit dieser 16 Risikofaktoren a bis p kann als das Wahrnehmungsmodul der gesamten Verkehrsinfrastruktur eines Territoriums aufgefasst werden, im Prinzipschema (Figur) als territoriales Wahrnehmungsmodul 3 bezeichnet. Dabei ist nicht ausgeschlossen, dass sich unter anderen verkehrsgeographischen Bedingungen neue und mehr als 16 Risikofaktoren des äußeren Milieus finden lassen.

Aus diesem territorialen Wahrnehmungsmodul 3 generiert jeder einzelne Streckenabschnitt des Straßennetzes seine spezifische alphanumerische Sequenz permanenter Risikofaktoren, die er in Abhängigkeit von den aktuellen Umwelteinflüssen und von der aktuellen Verkehrssituation mit den entsprechenden temporären Risikofaktoren komplettiert, im Prinzipschema als alphanumerische Sequenz 4 dargestellt. Die aktuelle Sequenz eines Streckenabschnitts kann demzufolge zu unterschiedlichen Zeitpunkten unterschiedlich ausfallen. Die Generierung der alphanumerischen Sequenz 4 aus dem territorialen Wahrnehmungsmodul 3 mit Hilfe des topographischen Softwaremoduls 1 und des Sensorpakets 2 vollzieht sich als Ausprägung und Berechnung von Eingabe- und Messgrößen mittels künstlich-neuronaler Netze.

Das Fahrzeug detektiert indessen nicht den aktuellen, sondern immer den darauf- folgenden Streckenabschnitt. Das ermöglicht technisch ein vorausschauendes Fahren und rechtzeitige Reaktionen auf gegebenenfalls herannahende Gefahren in ausreichender räumlicher Distanz. Umwelteinflüsse werden jedoch bereits im aktuellen Streckenabschnitt detektiert, als Memory - Information in den folgenden Abschnitt mitgenommen und in diesem entweder bestätigt oder gelöscht.

Die überwiegende Mehrzahl der Sequenzen besteht in der Regel aus 1 bis 5 Risikofaktoren; mehr als 5 Faktoren treten eher selten auf. Keine Faktoren sind praktisch unmöglich, weil es keine Straße ohne Geschwindigkeitszonen gibt. Der Anfang und das Ende jeder Geschwindigkeitszone ist in der Regel durch entsprechende Geschwindigkeitsbegrenzungsschilder nach der Straßenverkehrsordnung ausgewiesen. Dazu gehören auch Ortseingangs- und Ortsausgangsschilder. Sinngemäß sind auf deutschen Autobahnen auch Anfang und Ende der Strecken unbegrenzter Geschwindigkeit durch die Schilder der vorhergehenden und nachfolgenden Zone ausgewiesen.

In einem weiteren Arbeitsschritt wird die alphanumerische Sequenz 4 an einen Geschwindigkeitsmarker 5 übertragen, der mit einem Tachometer 6 verbunden ist. Der Geschwindigkeitsmarker 5 vergleicht die auf dem Tachometer ausgewiesene aktuelle Fahrgeschwindigkeit mit dem Risikofaktor d (Geschwindigkeitszone) der alphanumerischen Sequenz 4, der ausnahmslos in jeder Sequenz vorkommt. Als "minimale Geschwindigkeit" wird ein Marker gesetzt, wenn die vom Tachometer gemessene Geschwindigkeit unter 30 km / h liegt. Der Marker "erlaubte Geschwindigkeit" wird gesetzt, wenn die vom Tachometer gemessene Geschwindigkeit dem Risikofaktor d entspricht, und der Marker "unerlaubte Geschwindigkeit", wenn die gemessene Geschwindigkeit größer ist als im Faktor d.

Mit diesem Marker verlässt die Sequenz im Output den Geschwindigkeitsmarker 5 als markierte Sequenz 7 und wird an ein Speichermodul für Risikofaktoren weitergeleitet, im Prinzipschema als Risikomodul 8 bezeichnet. In diesem Modul sind alle im Territorium festgestellten unfallträchtigen Sequenzen gespeichert, wie sie sich mit entsprechendem Know-how selbst retrospektiv über mehrere Jahre aus den gespeicherten Daten der amtlich registrierten Unfälle und entsprechenden Zusatzuntersuchungen ermitteln lassen. Als Zusatzuntersuchungen kommen im wesentlichen Vor - Ort - Untersuchungen, die Auswertung lokaler Unfallschwerpunkte, die Auswertung von infrastrukturellen Unfallprofilen unter Zuhilfenahme detaillierter amtlicher Straßeninformationsbanken und Experimentalfahrten mit zweckentsprechend vorgerüsteten Fahrzeugen in Betracht. Die als Grundversion gespeicherten Sequenzen werden von Zeit zu Zeit mit Updates aktualisiert.

Findet die markierte alphanumerische Sequenz 7 im Risikomodul 8 ihr Pendant, wird ein Signal an das Steuersegment 12 abgesetzt, aber in diesem allein noch nicht wirksam. Der Grund dafür ist, dass das Risikomodul 8 mit seinen gespeicherten unfallträchtigen Sequenzen quasi nur das allgemeine, für das Territorium relevante Gedächtnis darstellt. Um zu überprüfen, ob dieses auch in spezifischer Weise für das eigene Fahrzeug zutrifft, wird die markierte alphanumerische Sequenz 7 zunächst einem Feedback 9 unterzogen.

Das Risikomodul 8 ist ferner mit einer Stellgröße versehen, über die der Fahrer ein sehr geringes oder ein ausgewogenes Risiko als Sollgröße einstellen kann. Um ein sehr geringes Risiko handelt es sich dann, wenn das Modul im Vergleich der markierten alphanumerischen Sequenz mit den gespeicherten Sequenzen höchstens einen Unfall mit sehr geringem Sachschaden akzeptieren darf. Ein ausgewogenes Risiko liegt vor, wenn der Sachschaden zwar größer ist, aber die eigene Fortbewegung des Fahrzeugs gesichert bleibt. Mögliche Verletzungen von Personen sind nicht zu akzeptieren. Deshalb lösen alle Sequenzen, die den Risikofaktor p enthalten (Beteiligung von Fußgängern und Radfahrern gemäß Tabelle 1), das Signal einer gefährlichen Situation aus. Sinngemäß gilt das auch für die Faktoren f (Bäume und Masten), n (Nässe) und o (vorausfahrende Fahrzeuge) und für Cluster, die erst durch die Kombination verschiedener Faktoren abgestufte Gefahren erkennen lassen.

Das Feedback 9 bezieht sich im Prinzipschema (Figur) lediglich auf die Sensorik der Fahrdynamikregelung 10. Als eine solche Sensorik kommen sowohl die des herkömmlichen Antiblockiersystems (ABS) und seine Weiterentwicklungen in Betracht als auch das von Gaupp et al. (2001) beschriebene vollautomatische System mit den 4 Sensoren der Raddrehzahl, der Giergeschwindigkeit, der Längs- und Querstabilität und des Lenkradwinkels.

Die markierte alphanumerischen Sequenz 7 erhält im Feedback 9 einen zweiten Marker, der entweder die Gefährlichkeit für das eigene Fahrzeug bestätigt, weil sie eine Instabilität der Fahrdynamik auslöst oder auszulösen droht, oder nicht bestätigt. Mit diesem zweiten Marker verlässt die Sequenz das Feedback 9 als doppelt markierte Sequenz 11, deren Marker $M_2$ entweder eine "instabile Fahrdynamik" oder "stabile Fahrdynamik" ausweist.

Findet eine einfach markierte alphanumerische Sequenz 7 im Risikomodul 8 nicht ihr Pendant und / oder stellt sich im Feedback 9 ihre Gefährlichkeit für das eigene Fahrzeug heraus, wird diese Sequenz automatisch dem Fundus der im Risikomodul 8 abgespeicherten Sequenzen zugefügt. Im Gegenzug können ursprünglich mit der Grundversion oder mit Updates gespeicherte Sequenzen allgemeiner Relevanz, die sich im Feedback 9 aber für das eigene Fahrzeug als nicht gefährlich erweisen, im Zuge ihrer praktischen Erprobung auf Fahrt gelöscht werden. Diese Vorgänge halten das Risikomodul zusätzlich aktuell.

Das Feedback muss sich nicht nur, wie im Prinzipschema (Figur) dargestellt, auf die Sensorik der Fahrdynamikregelung beziehen. Denkbar sind auch Bezüge zur Sensorik des Spurhaltens in der Längsrichtung, wie in der DE 196 38 511 A 1 beschrieben, zur Sensorik der komplexen Erfassung des Verkehrsraums vor einem Kraftfahrzeug, beschrieben in der DE 44 37 365 A 1, zur Sensorik anderer sicherheitsrelevanter Systemzustandsgrößen eines Kraftfahrzeugs, wie in der DE 197 00 353 A 1 als Beispiel offenbart, zur Sensorik des Fahrzeug - Kontrollsystems, wie in der US 005 748 476 A ausgeführt, und zu anderen analogen Systemen.

Die doppelt markierte Sequenz 11 wird an ein Steuersegment 12 weitergegeben, das über eine Schnittstelle mit dem Motorsegment 13 verbunden ist. Die "instabile Fahrdynamik" im Marker $M_2$ verstärkt das vom Risikomodul generierte Signal. Dieses verstärkte Signal, das nunmehr ein gefährliches Risiko anzeigt, löst im Motorsegment 13 ein regelndes Motormanagement und einen entsprechenden Bremsvorgang aus. Bei unverstärktem Signal fallen die beiden Vorgänge wesentlich moderater aus, sofern keine Beteiligung der Risikofaktoren o (entgegenkommende Fahrzeuge) und p (Fußgänger und Radfahrer) vorliegt. Die Aktionen des Steuersegments 12 lassen sich zusätzlich durch ein abgestuftes Aufleuchten eines Lichtsignals im Display anzeigen.

Damit hat das Sicherheits-Audit seine Funktion als elektronische Fahrerassistenz erfüllt. Seine zweite Funktion bezieht sich auf die Risikobewertung der Infrastruktur. Dazu wird die doppelt markierte alphanumerische Sequenz 11 zunächst der risikotopographischen Software 14 zugeführt, die die Sequenz mit den relevanten geographischen Koordinaten versieht und anschließend in einem Speicher 15 abspeichert. Das auf diese Weise gewonnene Fahrstreckenprotokoll kann entsprechenden Institutionen zur Auswertung übergeben werden, wenn es vollständig anonymisiert angelegt worden ist. Im Vergleich zu analogen amtlichen Unfallauswertungen ganzer Territorien lassen sich wertvolle Erkenntnisse über differenzierte Risikobelastungen der Verkehrsinfrastruktur gewinnen.

Denkbar sind sowohl randomisierte Stichproben als auch Experimentalfahrten im Sinne von Interventionsstudien.

Der Geschwindigkeitsmarker 5, das Risikomodul 8, das Feedback 9 und das Steuersegment 12 sind vorrichtungsseitig entweder in einer gemeinsamen Box untergebracht, die fest im Fahrzeug installiert ist und über einen gemeinsamen Kabelstrang mit Energie versorgt wird, oder in einem transportablen Personal Digital Assistent (PDA), der in einer Halterung mit energieseitigem Steckkontakt mitzuführen ist. In geeigneter Weise sind die Box oder der PDA mit dem Navigationssystem verbunden. Das Sensorpaket 2 ist mit der Box über einen Steckkontakt verknüpft oder an den PDA gekoppelt.

### Liste der Bezugzeichen

| | |
|---|---|
| 1 | topographisches Softwaremodul |
| 2 | Sensorpaket |
| 3 | territoriales Wahrnehmungsmodul |
| 4 | alphanumerische Sequenz |
| 5 | Geschwindigkeitsmarker |
| 6 | Tachometer |
| 7 | markierte Sequenz |
| 8 | Risikomodul |
| 9 | Feedback |
| 10 | Fahrdynamikregelung |
| 11 | doppelt markierte Sequenz |
| 12 | Steuersegment |
| 13 | Motorsegment |
| 14 | risikotopographische Software |
| 15 | Speicher |

### Patentansprüche

1. Verfahren zur risikogeregelten Geschwindigkeit eines Kraftfahrzeuges, das sowohl als elektronische Fahrerassistenz als auch zum Sicherheits-Audit der Verkehrsinfrastruktur eines Territoriums eingesetzt wird, bei dem in vorbestimmten Streckenabschnitten einer Fahrstrecke oder Straße Risikofaktoren des äußeren Milieus ermittelt und anhand von Geschwindigkeitsmodulen geprüft und für eine Geschwindigkeitsregulierung verwendet werden, wobei aus der Gesamtheit der detektierten Risikofaktoren des äußeren Milieus für jeden definierten Streckenabschnitt eine spezifische Sequenz mittels künstlich-neuronaler Netze ermittelt und mit gespeicherten Sequenzen verglichen wird,
**dadurch gekennzeichnet, dass**

- die spezifische Sequenz alphanumerisch ist und in einem fahrzeugeigenen Feedback auf ihre Gefährlichkeit geprüft wird,
- die detektierte alphanumerische Sequenz in einem Geschwindigkeitsmarker (5) mit einer Geschwindigkeitsklasse markiert wird, wobei die Geschwindigkeitsklassen aus einer minimalen, erlaubten und unerlaubten Geschwindigkeit bestehen, und
- die in einem Risikomodul (8) gespeicherten gefährlichen Sequenzen aus territorialen Unfallanalysen und/oder aus dem Feedback (9) des Kraftfahrzeuges genommen und aktualisiert werden.

2. Verfahren nach Anspruch 1,
   **dadurch gekennzeichnet, dass** sich das Feedback (9) auf die Fahrdynamikregelung des eigenen Fahrzeuges (10) und/oder auf andere Kriterien der Fahrsicherheit bezieht.

3. Verfahren nach Anspruch 1,
   **dadurch gekennzeichnet, dass** die doppelt markierte Sequenz (11) bei unfallträchtigem Risiko im Steuersegment (12) ein Signal auslöst, das einen regelnden Eingriff in das Motormanagement (13) und auf das Bremssystem bewirkt.

4. Verfahren nach Anspruch 1,
   **dadurch gekennzeichnet, dass** die doppelt markierte Sequenz (11) in der risikotopographischen Software (14) mit den geographischen Koordinaten versehen und anschließend im Speicher (15) abgespeichert wird und zu einem beliebigen Zeitpunkt nach der Fahrt als Bestandteil des Fahrprotokolls zusammen mit den anderen abgespeicherten doppelt markierten alphanumerischen Sequenzen zur Risikoanalyse der Verkehrsinfrastruktur des Territoriums herangezogen wird.

5. Vorrichtung zur risikogeregelten Geschwindigkeit eines Kraftfahrzeuges, bestehend aus einem an ein Navigationssystem und ein Sensorpaket gekoppeltes Aufnahmemodul, aus einem Speichermodul für Risikofaktoren und aus einem Steuersegment für ein Motormanagement,
   **dadurch gekennzeichnet, dass** in der Funktionskette zwischen dem Aufnahmemodul und dem Speichermodul ein Geschwindigkeitsmarker (5) angeordnet ist, der mit einem Tachometer (6) für das Fahrzeug verbunden ist, und dass sich in der Funktionskette zwischen dem Speichermodul und dem Steuersegment (12) ein Feedbackmodul (9) befindet, das mit Einrichtungen zur Fahrsicherheit verbunden ist.

6. Vorrichtung nach Anspruch 5,
   **dadurch gekennzeichnet, dass** der Geschwindigkeitsmarker (5) eingangsseitig mit einer risikotopographischen Software (14) verbunden ist, aus der ein topographisches Softwaremodul (1) des Streckenabschnitts generiert wird.

7. Vorrichtung nach Anspruch 5,
   **dadurch gekennzeichnet, dass** das Speichermodul für Risikofaktoren ein Risikomodul (8) ist, das aus dem Vergleich der alphanumerischen Sequenz (4) mit gespeicherten Sequenzen ein Signal an das Steuersegment (12) generiert, das im Feedbackmodul (9) geprüft und gegebenenfalls korrigiert wird.

8. Vorrichtung nach Anspruch 7,
   **dadurch gekennzeichnet, dass** das Risikomodul (8) zusätzlich über eine Stellgröße verfügt, über die der Fahrer ein minimales oder ausgewogenes Risiko einstellen kann.

9. Vorrichtung nach Anspruch 5,
   **dadurch gekennzeichnet, dass** die Einrichtung zur Fahrsicherheit sich auf eine Fahrdynamikregelung des Fahrzeuges und/oder auf andere Kriterien der Fahrsicherheit bezieht.

**Claims**

1. Method of controlling the speed of a motor vehicle on the basis of risk, which is used both for electronically assisting the driver and as a means of conducting a safety audit of the traffic infrastructure of a territory, whereby risk factors cf the external environment are determined in predefined route portions of a driving route or road, and checked on the basis of speed modules and used as a means of controlling speed, and a specific sequence is determined from the entirety of the detected risk factors of the external environment for each defined route portion by means of an artificial neural network and compared with stored sequences,
   **characterised in that**

- the specific sequence is alphanumeric and its risk factor is checked in a vehicle on-board feedback system,
- the detected alphanumeric sequence is marked with a speed classification in a speed marker (5), which speed classifications comprise a minimum, permitted and non-permitted speed, and
- the risky sequences stored in a risk module (8) are taken from territorial accident analyses and/or from the feedback system (9) of the motor vehicle and updated.

2. Method as claimed in claim 1,
**characterised in that** the feedback system (9) is based on the driving dynamics control system on-board the vehicle (10) and/or on other criteria of driving safety.

3. Method as claimed in claim 1,
**characterised in that** a sequence (11) in the control segment (12) marked twice in the event of a risk which might potentially cause an accident triggers a signal which causes a controlling intervention in the engine management system (13) and the brake system.

4. Method as claimed in claim 1,
**characterised in that** the twice marked sequence (11) is provided with geographic co-ordinates in the risk topography software (14) and then stored in the memory (15), and is used at any point in time after the journey as an integral element of the driving protocol in conjunction with the other stored, twice marked alphanumeric sequences for a risk analysis of the traffic infrastructure of the territory.

5. Device for controlling the speed of a motor vehicle on the basis of risk, comprising a recording module coupled with a navigation system and a sensor pack, a memory module for risk factors and a control segment for engine management,
**characterised in that** a speed marker (5) is disposed in the function chain between the recording module and the memory module, which is connected to a tachometer (6) for the vehicle, and a feedback module (9) is disposed in the function chain between the memory module and the control segment (12) which is connected to units relating to driving safety.

6. Device as claimed in claim 5,
**characterised in that** the speed marker (5) is connected to a risk topography software (14) at the input end, from which a topographical software module (1) of the route portion is generated.

7. Device as claimed in claim 5,
**characterised in that** the memory module for risk factors is a risk module (8), which generates a signal to the control segment (12), based on a comparison of the alphanumeric sequence (4) with stored sequences, which is checked in the feedback module (9) and corrected if necessary.

8. Device as claimed in claim 7,
**characterised in that** the risk module (8) additionally contains a position variable, by means of which the driver can set a minimum or balanced risk.

9. Device as claimed in claim 5,
**characterised in that** the unit for driving safety is based on a driving dynamics control system of the vehicle and/or on other criteria of driving safety.

**Revendications**

1. Procédé de réglage de la vitesse d'un véhicule automobile en fonction des risques, utilisé aussi bien comme assistance électronique auprès du conducteur que pour l'audit de sécurité de l'infrastructure routière d'un territoire, selon lequel on détermine des facteurs de risque relatifs au milieu extérieur dans des sections prédéterminées d'un itinéraire ou d'une rue, on les teste à l'aide de modules de vitesse et on les utilise en vue d'une régulation de vitesse, en déterminant une séquence spécifique à partir de la totalité des facteurs de risque relatifs au milieu extérieur détectés, pour chaque section d'itinéraire définie, au moyen de réseaux neuronaux artificiels et en la comparant à des séquences pré-enregistrées,
**caractérisé en ce que**

- la séquence spécifique est alphanumérique et est soumise à une évaluation de sa dangerosité dans une rétroaction propre au véhicule,
- la séquence alphanumérique détectée est soumise à un marquage de classe de vitesse dans un marqueur de vitesse (5), les classes de vitesse consistant en une vitesse minimale, une vitesse permise et une vitesse non permise, et
- les séquences dangereuses pré-enregistrées dans un module de risque (8) proviennent d'analyses territoriales des accidents et/ou de la rétroaction (9) du véhicule et sont actualisées.

**2.** Procédé selon la revendication 1,
**caractérisé en ce que**
la rétroaction (9) se rapporte à la régulation de la dynamique de conduite du véhicule (10) propre et/ou à d'autres critères de sécurité routière.

**3.** Procédé selon la revendication 1,
**caractérisé en ce que**
la séquence (11) doublement marquée déclenche un signal dans le segment de commande (12) dans le cas d'un risque accidentogène, lequel entraîne une intervention régulatrice auprès du dispositif de gestion du moteur (13) et du système de freinage.

**4.** Procédé selon la revendication 1,
**caractérisé en ce que**
la séquence (11) doublement marquée est pourvue de coordonnées géographiques dans le logiciel de topographie des risques (14) puis est stockée dans la mémoire (15) et est exploitée à un quelconque moment après le trajet comme composante de protocole de conduite, conjointement aux autres séquences alphanumériques doublement marquées enregistrées, pour l'analyse des risques de l'infrastructure routière du territoire.

**5.** Dispositif de réglage de la vitesse d'un véhicule automobile en fonction des risques, composé d'un module de captation couplé à un système de navigation et à un ensemble de capteurs, d'un module d'enregistrement des facteurs de risque et d'un segment de commande destiné au dispositif de gestion du moteur,
**caractérisé en ce qu'**
un marqueur de vitesse (5) relié au tachymètre (6) du véhicule est disposé dans la chaîne de fonctions entre le module de captation et le module d'enregistrement, et un module de rétroaction (9) relié à des dispositifs de sécurité routière se trouve dans la chaîne de fonctions entre le module d'enregistrement et le segment de commande (12).

**6.** Dispositif selon la revendication 5,
**caractérisé en ce que**
le marqueur de vitesse (5) est relié côté entrée à un logiciel de topographie des risques (14) permettant de générer un module logiciel topographique (1) de la section d'itinéraire.

**7.** Dispositif selon la revendication 5,
**caractérisé en ce que**
le module d'enregistrement des facteurs de risque consiste en un module de risque (8) qui génère un signal au niveau du segment de commande (12) à partir de la comparaison entre la séquence alphanumérique (4) et les séquences enregistrées, lequel signal est examiné dans le module de rétroaction (9) et corrigé le cas échéant.

**8.** Dispositif selon la revendication 7,
**caractérisé en ce que**
le module de risque (8) dispose en outre d'une grandeur de réglage permettant au conducteur de régler un risque minimal ou pondéré.

**9.** Dispositif selon la revendication 5,
**caractérisé en ce que**
le dispositif de sécurité routière se fonde sur une régulation de la dynamique de conduite du véhicule et/ou sur d'autres critères de sécurité routière.

# Prinzipschema

| ① Topografisches Softwaremodul | ② Sensorpaket |

a | b | c | d | e | f | g | h | i | j | k | l | m | n | o | p

③ territoriales Wahrnehmungs-modul

④ alphanumerische Sequenz

b | d | g | l | o

⑤ Geschwindigkeitsmarker          //—Tachometer ⑥

⑦ markierte Sequenz

b | d | g | l | o | $M_1$

⑧ Risikomodul

⑨ Feedback          //— ⑩ Fahrdynamik-regelung

⑪ doppelt markierte Sequenz

$M_2$ | b | d | g | l | o | M

⑫ Steuersegment          //— ⑬ Motorsegment

Risikotopografische Software ⑭          ⑮ Speicher